# EUROPÄISCHE PATENTANMELDUNG

(11) **EP 2 564 922 A2**
(43) Veröffentlichungstag der Anmeldung: **06.03.2013**
(21) Anmeldenummer: 12180964.4
(22) Anmeldetag: 20.08.2012
(51) Int. Cl.: B01J 19/10, B06B 3/00

(54) **Vorrichtung und Sonotrode für die Prozesstechnik**

(30) Priorität: 29.08.2011 DE 102011081746
(71) Anmelder: Telsonic Holding AG, 9552 Bronschhofen (CH)
(72) Erfinder: Solenthaler, Peter, 9543 St. Margarethen (DE)
(74) Vertreter: Dreiss

(57) **Zusammenfassung**

Die Erfindung betrifft eine Vorrichtung zur Überwachung, Steuerung und/oder Beeinflussung von industriellen oder chemischen Prozessen der Prozesstechnik mittels Ultraschall mit einer Ultraschalleinrichtung, die mit einer oder mehreren Sonotroden koppelbar ist, wobei die Sonotrode(n) einen Sonotrodenkörper aufweist, der für den jeweiligen Prozess in seiner Form und Ausgestaltung speziell angepasst ist, und mit einer Steuerungseinheit, wobei der Sonotrodenkörper mindestens abschnittsweise aus einem elektrisch leitfähigen keramischen Werkstoff besteht.

## Beschreibung

Die vorliegende Erfindung betrifft eine Vorrichtung zur Überwachung, Steuerung und/oder Beeinflussung von Prozessen in der Prozesstechnik mittels Ultraschall nach dem Oberbegriff des Anspruchs 1 sowie eine Sonotrode für die Prozesskontrolle, Steuerung und/oder Beeinflussung von technischen Prozessen auf Ultraschallbasis nach dem Oberbegriff des Anspruchs 7.

Für die Überwachung und Steuerung von technischen Prozessen der chemischen Industrie zum Beispiel sind im Stand der Technik Sonotroden bekannt, die mit der Erzeugung von hochfrequenten Schwingungen (Ultraschall) in einem Prozessmedium wie einem Gas oder einer Flüssigkeit eine Steuerung, Kontrolle oder Beeinflussung der Prozesse ermöglichen. Derartige Vorrichtungen zur Prozesskontrolle auf Ultraschallbasis weisen regelmäßig einen Schwingungserzeuger bzw. Ultraschalleinrichtung auf, die mit einer oder mehreren Sonotroden gekoppelt werden kann, welche dann ihrerseits die Einleitung der Ultraschallschwingungen in das Medium hervorrufen.

Zu den industriellen Prozessen, in welchen solche Ultraschall-Sonotroden üblicherweise eingesetzt werden, gehören beispielsweise die Verarbeitung von Flüssigkeiten (engl.: *liquid processing*), das Reinigen, das Sieben oder ähnliches. Auch für die Herstellung von chemischen Produkten oder flüssigen Lebensmitteln werden Ultraschallprozesstechniken verwendet. Dabei wird eine üblicherweise aus einem metallischen Werkstoff wie Titan, Aluminium oder Stahl hergestellte Sonotrode als das eigentliche Werkzeugteil in das Prozessmedium eingetaucht oder an dem Prozessmedium angekoppelt. Die Steuerung oder Beeinflussung des Prozessmediums erfolgt dann über das Applizieren einer hohen Frequenz im Ultraschallbereich, zum Beispiel 20, 30, 35 oder 36 kHz.

Die hierzu bisher verwendeten metallischen Sonotroden haben den Nachteil, dass bestimmte Aufgaben zur Steuerung und Kontrolle des Prozessmediums mit ihnen nicht so einfach realisierbar sind. Außerdem sind die Metallwerkstoffe, welche bisher für die Herstellung derartiger Sonotroden für die Prozesstechnik eingesetzt wurden, leicht angreifbar, zum Beispiel durch die chemischen Eigenschaften verschiedener Prozessmedien.

Demgegenüber liegt der vorliegenden Erfindung die Aufgabe zugrunde, eine solche Ultraschallvorrichtung sowie eine für eine solche Ultraschallvorrichtung geeignete Sonotrode bereitzustellen, die im Hinblick auf die Aufgaben einer Überwachung, Steuerung und Beeinflussung eines Prozessmediums in der Prozesstechnik eine größere Flexibilität aufweisen und eine geringere Anfälligkeit gegen eine Abnutzung oder Beschädigung durch die chemischen Eigenschaften der Prozessmedien haben.

Diese Aufgabe wird mit einer Vorrichtung mit den Merkmalen des Anspruchs 1 sowie einer Sonotrode mit den Merkmalen des Anspruchs 7 gelöst. Vorteilhafte Ausgestaltungen und Weiterbildungen sind Gegenstand der abhängigen Ansprüche.

Die erfindungsgemäße Vorrichtung für die Prozesstechnik weist eine Ultraschalleinrichtung zur Erzeugung von Schwingungen im Ultraschallbereich auf, welche mit einer oder mehreren Sonotroden koppelbar ist, wobei die Sonotrode einen Sonotrodenkörper aufweist, der für den jeweiligen Prozess in seiner Form und Ausgestaltung speziell angepasst ist, sowie eine Steuerungseinheit und ist **dadurch gekennzeichnet, dass** der Sonotrodenkörper mindestens abschnittsweise aus einem elektrisch leitfähigen keramischen Werkstoff besteht. Die Sonotrode ist damit sehr resistent gegenüber Beschädigungen, Abnutzung oder Angriffen seitens des Prozessmediums, das unter anderem chemisch aggressive Bestandteile enthalten kann. Zum anderen kann aufgrund der elektronischen Leitfähigkeit der Sonotrode die Beeinflussung und Steuerung des Prozessmediums weiter optimiert werden gegenüber herkömmlichen metallischen Sonotroden aus dem Stand der Technik. Zum Beispiel kann mit der elektronischen Leitfähigkeit eine Messung des Widerstands des umgebenden Prozessmediums durch die Sonotrode direkt ausgeführt werden. Umgekehrt können zur Beeinflussung des Prozessmediums elektronische Ströme direkt durch die leitfähige keramische Sonotrode eingeleitet werden. Beispielsweise ist es mit der erfindungsgemäßen Vorrichtung möglich, in einem Elektrolyseprozess den Vorgang der Elektrolyse durch die leitfähige keramische Sonotrode zu beschleunigen. Die Elektrolyse, welche beispielsweise zur Wasserstoffgewinnung mittels Ultraschallenergie durchgeführt wird, kann so mit der erfindungsgemäßen Vorrichtung gezielt unterstützt werden. Das Durchführen der Elektrolyse wird dadurch deutlich beschleunigt.

Nach einer vorteilhaften Ausgestaltung der Erfindung ist die Sonotrode angepasst, um in ein Prozessmedium eingetaucht werden zu können. Die Sonotrode weist hierfür zum Beispiel eine gegenüber der Umgebung vollständig gekapselte Bauform auf, die lediglich mit einem Verbindungskabel mit der außerhalb des Mediums sind befindenden Ultraschalleinrichtung verbunden ist. Auch kann nach einem vorteilhaften Aspekt der Erfindung die geometrische Form der Sonotrode speziell auf das jeweilige Anwendungsgebiet und die Art des Prozesses angepasst sein. Zum Beispiel kann eine Sonotrode eine rotationszylindrische oder kegelartige Form aufweisen, um einen möglichst guten Wirkungsgrad nicht nur bei der Einleitung der Schwingungen im Ultraschallbereich, sondern auch bei den zusätzlichen Aufgaben der Messung über einen elektrischen Widerstand zum Beispiel oder der Beeinflussung durch das Einleiten von elektrischem Strom über die Sonotrode zu haben.

Nach einer vorteilhaften Ausführungsform der Erfindung sind Mittel zur Messung eines elektrischen Widerstands an der Sonotrode der Vorrichtung vorgesehen. Ein momentan im Prozessmedium bestehender Widerstand, der sich in bestimmten Fällen permanent aufgrund der Zusammensetzung und der Mischung beispielsweise von verschiedenen Medien ändern kann, kann so mit der erfindungsgemäßen Vorrichtung direkt überwacht und gesteuert werden. Die Überwachung und Kontrolle des Prozesses ist hierdurch verbessert.

Eine bevorzugte Ausgestaltung der erfindungsgemäßen Vorrichtung sieht vor, dass Mittel zum Erzeugen und Messen einer elektrischen Messgröße in einem die Sonotrode umgebenden Medium vorgesehen sind. Bei dem Medium kann es sich um ein gasförmiges oder flüssiges Medium handeln, das über die Ultraschallbeaufschlagung mittels der Vorrichtung gezielt bearbeitet oder beeinflusst wird. Die elektrische Messgröße kann in vorteilhafter Weise für ein Optimieren der Steuerung des Prozessablaufs verwendet werden.

Nach einer weiteren vorteilhaften Ausgestaltung der Erfindung ist zwischen der Steuerungseinheit der Vorrichtung und der Sonotrode ein geschlossener Stromkreis zur Messung, Kontrolle und/oder Steuerung des Prozesses aufgebaut. Der geschlossene Stromkreis ist vergleichsweise einfach im konstruktiven Aufbau und erlaubt es dennoch, eine sichere Aufnahme von elektrischen Messgrößen oder eine Einleitung von elektrischem Strom in das Prozessmedium durchzuführen.

Die Erfindung betrifft ebenso eine Sonotrode für die Ultraschall-Prozesstechnik mit den Merkmalen des Anspruchs 1. Die Sonotrode ist speziell angepasst für eine Prozesskontrolle, Prozesssteuerung und/oder Prozessbeeinflussung auf Ultraschallbasis bei der Verarbeitung von liquiden (gasförmigen oder flüssigen) Medien und ist **dadurch gekennzeichnet, dass** ein Sonotrodenkörper vorgesehen ist, welcher mindestens abschnittsweise aus einem elektrisch leitfähigen keramischen Werkstoff besteht. Durch den keramischen Werkstoff ist die Sonotrode vergleichsweise leicht und wenig anfällig gegenüber chemischen Angriffen durch die Inhaltsstoffe eines Prozessmediums. Ferner ist der speziell für die Sonotrode gewählte elektrisch leitende keramische Werkstoff geeignet, direkt durch den Sonotrodenkörper hindurch elektrische Ströme zu leiten oder Messungen beispielsweise des elektrischen Widerstands im Bereich des umgebenden Mediums durchzuführen. Mit der erfindungsgemäßen Sonotrode können daher zusätzliche Aufgaben und Funktionen neben der eigentlichen Aufgabe der Sonotrode, nämlich der Erzeugung von Ultraschallschwingungen im Prozessmedium, durchgeführt werden. Die Prozesse können gezielt beschleunigt werden, beispielsweise im Fall einer Elektrolyse zur Erzeugung von Wasserstoff. Die elektrische Leitfähigkeit des keramischen Materials der Sonotrode ermöglicht auch weitere Funktionalitäten wie das zusätzliche Einleiten von elektrischen Stromstößen oder ähnliches.

Nach einem vorteilhaften Aspekt der Erfindung besteht der Sonotrodenkörper vollständig aus einem elektrisch leitfähigen keramischen Werkstoff. Ein Beispiel für einen solchen keramischen Werkstoff ist das Material mit der Bezeichnung TSN-CS14E, welches eine gute Leitfähigkeit für elektrische Ströme in einem niederohmigen Bereich hat und daher gut für die Messung von Widerstandswerten in dem Prozessmedium geeignet ist.

Nach einem weiteren vorteilhaften Aspekt der Erfindung weist die Sonotrode einen Messfühler zur Messung eines elektrischen Widerstands auf. Die Widerstandsmessung kann hierdurch direkt in der leitfähigen Sonotrode selbst ausgeführt werden, und es ist keine umständliche Verkablung etc. erforderlich.

Weitere Vorteile und Merkmale der Erfindung werden im Folgenden mehr im Detail anhand eines Ausführungsbeispiels einer erfindungsgemäßen Vorrichtung und einer Sonotrode für eine solche Vorrichtung beschrieben werden.

Gemäß einem Ausführungsbeispiel einer erfindungsgemäßen Vorrichtung für die Prozesstechnik mit Ultraschall ist eine Ultraschalleinrichtung oder Schwingungserzeugungseinrichtung für die Erzeugung von Schwingungen im Ultraschallbereich vorgesehen, die mit einer Sonotrode gekoppelt ist. Die Sonotrode weist einen Sonotrodenkörper auf, der aus einem elektrisch leitfähigen keramischen Werkstoff, vorzugsweise dem Material mit der Bezeichnung TSN-CS14E, hergestellt ist. Die leitfähige keramische Sonotrode ist in ihrer Beschaffenheit und ihrem Aufbau angepasst, um in ein flüssiges Medium eingetaucht zu werden. Mit der Vorrichtung können chemische und physikalische Prozesse wie zum Beispiel die Elektrolyse zur Gewinnung von Wasserstoff verbessert werden. Gerade bei der Elektrolyse (aber auch z.B. in Brennstoffzellen) bilden sich an der Elektrode kleine Gasbläschen (chemischer Prozess), welche mittels Ultraschall "abgeschüttelt" werden können. Dieses Abschütteln ist ein physikalischer Prozess, der u.a. dazu führt, dass sich der Innenwiderstand der Elektrolysenzelle verbessert und so die Effizienz steigt. Der Prozessablauf kann durch Einleitung von elektrischem Strom direkt durch den Sonotrodenkörper aus der leitfähigen Keramik beschleunigt werden. Die Elektrolyse wird auf diese Weise unterstützt, und mit der erfindungsgemäßen Vorrichtung ist es zudem möglich, Messungen von elektrischen Größen wie zum Beispiel dem Widerstand in der Umgebung der Sonotrode durchzuführen. Auf diese Weise lassen sich Messgrößen für eine verbesserte Steuerung und Kontrolle des Prozessablaufs erreichen. Die Erfindung ist nicht auf das angegebene keramische Material beschränkt, und die Sonotroden können aus anderen keramischen Werkstoffen bestehen, solange diese zumindest eine geringe elektrische Leitfähigkeit haben. Der keramische Werkstoff weist langfristig geringe Abnutzungserscheinungen auf und ist zudem nicht anfällig gegenüber chemischen Aggressionen aufgrund von Bestandteilen der flüssigen oder gasförmigen Prozessmedien.

## Patentansprüche

1. Vorrichtung zur Überwachung, Steuerung und/oder Beeinflussung von industriellen oder chemischen Prozessen der Prozesstechnik mittels Ultraschall mit einer Ultraschalleinrichtung, die mit einer oder mehreren Sonotroden koppelbar ist, wobei die Sonotrode(n) einen Sonotrodenkörper aufweist, der für den jeweiligen Prozess in seiner Form und Ausgestaltung speziell angepasst ist, und mit einer Steuerungseinheit, **dadurch gekennzeichnet, dass** der Sonotrodenkörper mindestens abschnittsweise aus einem elektrisch leitfähigen keramischen Werkstoff besteht.

2. Vorrichtung nach Anspruch 1, **dadurch gekennzeichnet, dass** die Sonotrode angepasst ist, um in ein Prozessmedium eingetaucht werden zu können.

3. Vorrichtung nach Anspruch 1 oder 2, **dadurch gekennzeichnet, dass** Mittel zur Messung eines elektrischen Widerstands an der Sonotrode vorgesehen sind.

4. Vorrichtung nach einem der vorhergehenden Ansprüche, **dadurch gekennzeichnet, dass** Mittel zum Erzeugen und Messen einer elektrischen Messgröße in einem die Sonotrode umgebenden Medium vorgesehen sind.

5. Vorrichtung nach einem der vorhergehenden Ansprüche, **dadurch gekennzeichnet, dass** die Steuerungseinheit angepasst ist zur Steuerung, Kontrolle und/oder Beschleunigung des Prozesses basierend auf einem über die Sonotrode erfassten Messwert.

6. Vorrichtung nach einem der vorhergehenden Ansprüche, **dadurch gekennzeichnet, dass** zwischen der Steuerungseinheit und der Sonotrode ein geschlossener Stromkreis aufgebaut ist zur Messung, Kontrolle und/oder Steuerung des Prozesses.

7. Sonotrode für die Prozesskontrolle, -steuerung und/oder -beeinflussung auf Ultraschallbasis, insbesondere für eine Vorrichtung nach einem der vorhergehenden Ansprüche 1 bis 6, **dadurch gekennzeichnet, dass** ein Sonotrodenkörper vorgesehen ist, welcher mindestens abschnittsweise aus einem elektrisch leitfähigen keramischen Werkstoff besteht.

8. Sonotrode nach Anspruch 7, **dadurch gekennzeichnet, dass** der Sonotrodenkörper vollständig aus einem elektrisch leitfähigen keramischen Werkstoff besteht.

9. Sonotrode nach Anspruch 7 oder 8, **dadurch gekennzeichnet, dass** die Sonotrode aus dem keramischen Werkstoff TSN-CS14E hergestellt ist.

10. Sonotrode nach einem der Ansprüche 7 bis 9, **dadurch gekennzeichnet, dass** die Sonotrode einen Messfühler zur Messung eines elektronischen Widerstands aufweist.
